# EUROPEAN PATENT APPLICATION

(11) **EP 4 807 624 A2**
(43) Date of publication of application: **16.09.2026**
(21) Application number: 26159533.4
(22) Date of filing: 19.02.2026
(51) Int. Cl.: G06N 3/045, G06N 3/047

(54) **INTERRUPT OPTIONS FOR GENERATIVE MODELS**

(30) Priority: 19.02.2025 US 202519057867
(71) Applicant: GDM Holding LLC, Mountain View CA 94043 (US)
(72) Inventor: Hartmann, Florian Nils, Mountain View California, 94043 (US); Sharifi, Matthew, Mountain View California, 94043 (US)
(74) Representative: Varley, James Richard

(57) **Abstract**

This specification relates to processing data using machine learning models. A computer implemented method is provided comprising: receiving an input query; and generating an output. The generating comprises, for a plurality of iterations: generating, using a machine-learning model, a data element for the iteration based on the input query, wherein the data element comprises: (i) an output data element indicative of an output of the machine-learning model; and/or (ii) an interrupt data element indicative of one or more interrupt options. For one or more of the plurality of iterations, the method comprises: in response to determining that the data element for the iteration and/or a previous iteration is an output data element, causing the output indicated by the output data element to be output; and in response to determining that the generative data element for the iteration and/or a previous iteration is an interrupt data element, causing the one or more interrupt options indicated by the interrupt data to be exposed via an interface. The method further comprises, during generation of the output: receiving, via the interface, data indicative of a selection of at least one interrupt option of the one or more interrupt options; and adapting the generation of the output based on the at least one selected interrupt option.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a nonlinear transformation to a received input to generate an output.

### SUMMARY

Implementations disclosed herein are directed towards at least providing a generative model that can output interrupt options for a user at inference time. During decoding, in addition to the usual generative output of the model, the generative model can output interrupt options that cause an interrupt option to be output to a user. The user can select an output interrupt option, an indication of which is fed into the generative model, causing the generative model to adapt its output based on the selected interrupt option.

According to a first aspect of this specification, there is described a computer implemented method comprising: receiving an input query; and generating an output. The generating comprises, for a plurality of iterations: generating, using a machine-learning model, a data element for the iteration based on the input query, wherein the data element comprises: (i) an output data element indicative of an output of the machine-learning model; and/or (ii) an interrupt data element indicative of one or more interrupt options. For one or more of the plurality of iterations, the method comprises: in response to determining that the data element for the iteration and/or a previous iteration is an output data element, causing the output indicated by the output data element to be output; and in response to determining that the generative data element for the iteration and/or a previous iteration is an interrupt data element, causing the one or more interrupt options indicated by the interrupt data to be exposed via an interface. The method further comprises, during generation of the output: receiving, via the interface, data indicative of a selection of at least one interrupt option of the one or more interrupt options; and adapting the generation of the output based on the at least one selected interrupt option.

The method may further comprise one or more of the following features, either alone or in combination.

The data element for at least one iteration may be further based on one or more data elements of a previous one or more iterations. The data element for at least one iteration may be further based on an interrupt initiation input to the machine-learning generative model.

The interrupt initiation input may be input to the machine-learning generative model in response to one or more processor interrupt signals. The one or more processor interrupts signals may be issued in response to a hardware event detected by a hardware interface.

The data element for an iteration may alternatively or additionally comprises an interrupt termination data element indicating one or more interrupt options for removal from the interface. The method may further comprise, for one or more of the iterations: in response to determining that the data element for the iteration and/or a previous iteration is an interrupt termination data element, causing one or more exposed interrupt options corresponding to the one or more interrupt options for removal from the interface to be removed from the interface.

The output data elements indicative of an output of the machine-learning model may comprise one or more tokens. The interrupt data element indicative of one or more interrupt options may comprise a plurality of interrupt tokens, the plurality of interrupt tokens comprising one or more interrupt initiation tokens and a respective one or more interrupt identity tokens. An output data element indicative of an output of the machine-learning generative model may comprise pixel data representing at least a part of a frame of video data.

An interrupt option may comprise one or more of: a pause command; a fast forward command; a skip command; an elaboration command; an expand command; a mute command; and/or a summarize command.

According to a further aspect of this specification, there is described a computer implemented method comprising: receiving an input query; and generating an output. The generating comprises, for a plurality of iterations: generating, using a first machine-learning model, a data element for the iteration based on the input query, wherein the data element comprises: (i) an output data element indicative of an output of the machine-learning generative model; and/or (ii) an interrupt data element indicative of one or more interrupt options. The method further comprises, for one or more of the plurality of iterations: in response to determining that the data element for the iteration and/or a previous iteration is an output data element, causing the output indicated by the output data element to be output; and in response to determining that the data element for the iteration and/or a previous iteration is an interrupt data element, causing the one or more interrupt options indicated by the interrupt data to be exposed via an interface. The method further comprises: receiving, via the interface, data indicative of a selection of at least one interrupt option of the one or more interrupt options; pausing generation of the output using the first machine-learning model; and for one or more further iterations: generating, using a second machine-learning model, a data element for the further iteration based on the input query and the one or more data elements of one or more previous iterations.

The method may further comprise one or more of the following features, either alone or in combination.

The second machine-learning model may have fewer parameters than the first machine-learning model.

The method may further comprise: during the one or more further iterations, receiving, via the interface, input indicative of an intent to end the interrupt option; in response to receiving the input indicative of an intent to end the interrupt option, for one or more subsequent iterations: generating, using the first machine-learning model, a data element for the subsequent iteration based on the input query and one or more data elements of the one or more previous iterations and/or the data elements of the one or more further iterations.

An output data element indicative of an output of the first machine-learning model may comprise pixel data representing at least a part of a frame of video data at first pixel and/or temporal resolution. An output data element indicative of an output of the second machine-learning model may comprise pixel data representing at least a part of a frame of video data at second pixel and/or temporal resolution. The first pixel and/or temporal resolution may be higher than the second pixel and/or temporal resolution.

According to a further aspect of this specification, there is described a computer implemented method comprising: for each of one or more iterations: obtaining a training sequence from a training dataset comprising a plurality of training sequences, the training sequence comprising a sequence of data elements comprising: a plurality of output data elements indicative of a target output of the machine-learning model; and one or more interrupt data elements indicative of one or more interrupt options. The method further comprises processing, using the machine-learning model, a subsequence of the training sequence to generate a predicted next data element in the training sequence; and comparing the predicted next data element in the training sequence to a ground truth next data element in the training sequence using an objective function. The method further comprises updating parameters of the machine-learning model based at least in part on the comparisons of the predicted next data elements in a training sequence to the respective ground truth next data element in that training sequence.

The method may further comprise one or more of the following features, either alone or in combination.

The one or more interrupt data elements indicative of one or more interrupt options may comprise: data indicating an identity of an interrupt option for exposure via an interface. The one or more interrupt data elements may comprise: data indicating an identity of a selected interrupt option.

Updating parameters of the machine-learning generative model based at least in part on the comparisons of the predicted next data elements in a training sequence to the respective ground truth next data element in that training sequence may comprise: updating a first subset of parameters of the machine-learning generative model while keeping a second subset of parameters of the machine-learning generative model fixed.

Updating parameters of the machine-learning generative model based at least in part on the comparisons of the predicted next data elements in a training sequence to the respective ground truth next data element in that training sequence may comprise: adapting the objective function based at least in part on an interrupt data element included in the subsequence of the training sequence.

According to a further aspect of this specification there is described systems comprising one or more processors and a memory, the memory storing computer readable instructions that, when executed by the one or more processors, cause the system to perform any one or more of the methods described herein.

According to a further aspect of this specification there is described computer program products comprising computer readable instructions that, when executed by a computer, cause the computer to perform any one or more of the methods described herein.

An output data element indicative of a generative output of the machine-learning generative model may comprise audio data. An output data element indicative of an output of the machine-learning generative model comprises a token indicative of a natural language output.

Particular embodiments of the subject matter described in this specification can be implemented so as to realize one or more of the following advantages.

The provision of interrupt options to the user during generation of generative content enables a user to adapt the output of the generative model on-the-fly. This can save on the computational cost of generating relevant content for a user, since the generative model can be instructed not to spend computing power on parts of the output that the user is not interested in or that are not relevant. Furthermore, particularly in the context of autoregressive models, the computational cost of generating further content can be reduced, since typically autoregressive models take as input the past output of the model. Typically the compute required to generate the output of an autoregressive model scales with the square of the number of input elements (e.g., tokens). Consequently, reducing the size of the input of the autoregressive model by preventing unnecessary output generation at previous iterations of the model can lead to significant reductions in the compute required to generate relevant output data. The interrupt options can provide a shortcut to inputting contextually relevant guiding information to the generative model to adapt the model output in real time, thereby facilitating an ongoing human-machine interaction. The systems, methods and apparatus described herein offer increased flexibility for interactions with a generative model by allowing users to interrupt the model with suggested options, without having to wait for the full output of the generative model to be decoded.

As used herein, a large language model (LLM) and/or vision and language model (VLM) is generative machine-learning model that can have, in some implementations, at least hundreds of millions of parameters, e.g., at least billions of parameters. An LLM/VLM can be a sequence-to-sequence model, a Transformer-based model, and/or can include an encoder and/or a decoder.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

Fig. 1A shows an overview of an example method for generating generative output that includes interrupt options using a machine-learning model.
Fig. 1B shows an overview of a further example method for generating generative output that includes interrupt options using a machine-learning model.
Fig. 2 shows an example of a user interface displaying generative output alongside interrupt options.
Fig. 3 shows an overview of an example method for training a generative model to generate interrupt options during generation of generative output.
Fig. 4 shows an overview of an example method for training a generative model to respond to selected interrupt options during generation of generative output.
Fig. 5 shows a flow diagram of an example method for generating generative output that includes interrupt options using a machine-learning model.
Fig. 6 shows a flow diagram of a further example method for generating generative output that includes interrupt options using a machine-learning model.
Fig. 7 shows a flow diagram of an example method for training a generative model to generate/respond to interrupt options during generation of generative output.
Fig. 8 shows a schematic example of a system/apparatus for performing any of the methods described herein.

In some examples, like reference numbers and designations in the various drawings indicate like elements.

### DETAILED DESCRIPTION

Generative models, such as Large language models (LLMs), now commonly power AI applications, for example AI assistants. These models are often computationally expensive to run, in particular if the input or output is long, it can often take a while before users see the full response to their query. However, in many scenarios, only part of the generative output is useful to a user and/or the user may want to "skip ahead" in the output.

The systems, methods and apparatus described herein provide an automatic process in which generative models can generate/propose interrupt options for users (e.g., "skip", "fast forward", or "elaborate on this"), which are then output to the user during the decoding process. An interrupt option can be selected by the user during the decoding process. The generative model is trained to understand/interpret these interrupt options, and adapt the generative output of the mode based on them. As a result, the systems, methods, and apparatus described herein can save user time, reduce the amount of compute spent on generative model decoding, and allow a user to guide the output of the generative model in real time.

The user queries a generative model, e.g., an LLM or VLM, as usual. In response, the generative model starts decoding. Examples of such models include, but are not limited to, Google's Gemini model, Gemma2 model and/or PaliGemma2 model. During decoding, the generative model can decode interrupt options that are displayed to a user via a user device. Currently available options are rendered to the user via the user device, e.g., as buttons that the user can select. The user can select an interrupt option at any point. An interrupt option may be hidden in response to the generative model decoding a remove interrupt option output and/or when a user selects the interrupt option.

When a user selects an interrupt option, the generative model is fed with input indicating the selected interrupt token. The generative model will then adapt its decoding based on the received interrupt option.

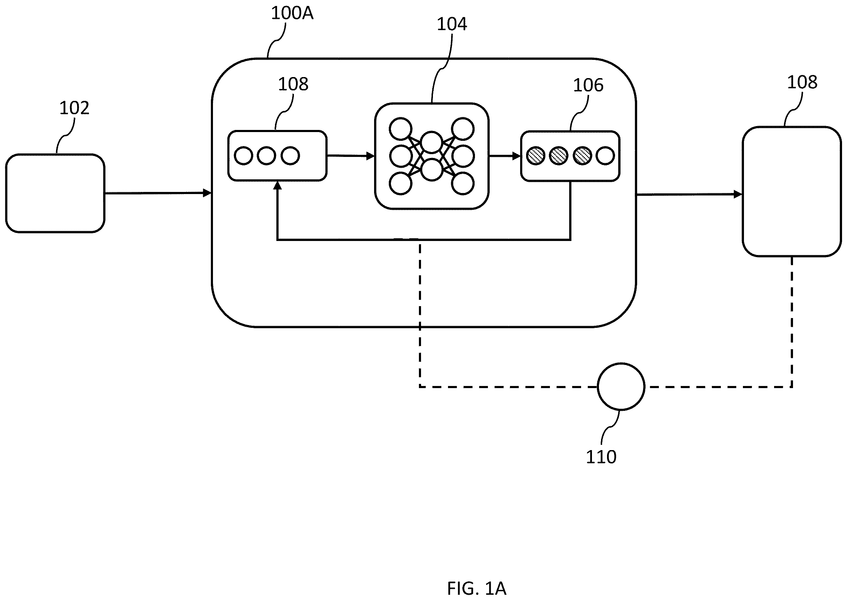

FIG. 1A shows an overview of an example system 100A for generating generative output using a machine-learning model. An input query 102 is received by the system. The input query 102 is iteratively processed by a generative ML model 104 to generate generative output 106, e.g., the generative ML model 104 processes a respective set of input data 108 for each iteration to generate a respective generative output 106 for the iteration. The input data 108 for an iteration may comprise previous outputs of the ML model 104, e.g., tokens output at previous iterations and/or previous versions of iteratively generated data (such as a partially denoised image for an iterative diffusion process). The generative output 106 for the iteration comprises an output data element indicative of a generative output of the machine-learning generative model, and/or an interrupt data element indicative of one or more interrupt options. If the generative output 106 comprises an output data element, the output data element can be output to a user, e.g., via a user device 108. If the generative output 106 comprises an interrupt data element, the corresponding one or more interrupts are exposed via an interface, e.g., output for display and interaction via the user device 108. The operation of the generative model 104 to generate the generative output 106 is referred to herein as "decoding" and/or "the decoding process."

The user may interact with an exposed interrupt option during the generation of the generative output 106 to select that interrupt option. An indication of the selected interrupt option 110 is then fed into the system 100 and used to adapt the generation of the generative output 106, e.g., by feeding a representation of the selected interrupt option into the input data 108 for the next iteration of the generative process. The machine-learning generative model 104 processes the input data 108 containing the representation of the selected interrupt option to generate generative output for the next iteration that is conditioned on the selected interrupt option.

The input query 102 is, in some examples, received via a user device, e.g., via a user interface of the user device. The input query 102 comprises, in some implementations, a natural language query. The natural language query comprises, in some examples, a natural language description of one or more target properties of the generative output 106. In some examples, the input query 102 comprises one or more images, e.g., one or more images for editing and/or use as a conditioning signal for generating further generative image(s), natural language and/or video content. In some examples, the input query 102 comprises one or more video samples, e.g., one or more video sections for editing and/or use as a conditioning signal for generating further generative video and/or natural language content. In some examples, the input query 102 comprises one or more audio samples, e.g., one or more audio sections for editing and/or use as a conditioning signal for generating further generative natural language, audio and/or video content. In some examples, the input query 102 is a multimodal query comprising input data in at least two modalities, e.g., an input natural language query and an input image/video, an input audio query and an input image/video, and input natural language query and input audio data. As an example, a multimodal query comprises a natural language query requesting information about an input image, e.g., "Describe this photograph", and an input image to which the query refers (implicitly or explicitly).

In some examples, the input query 102 can be received via a user interaction with a graphical user interface element. For example, a predefined button may be present in a graphical user interface, e.g., a document viewing application may have a button labelled "summarize document" or "give me more options", via which a user can initiate the generation of generative content. As another example, a video application may have an "animate" button via which a user can instruct a generative model to animate an input image.

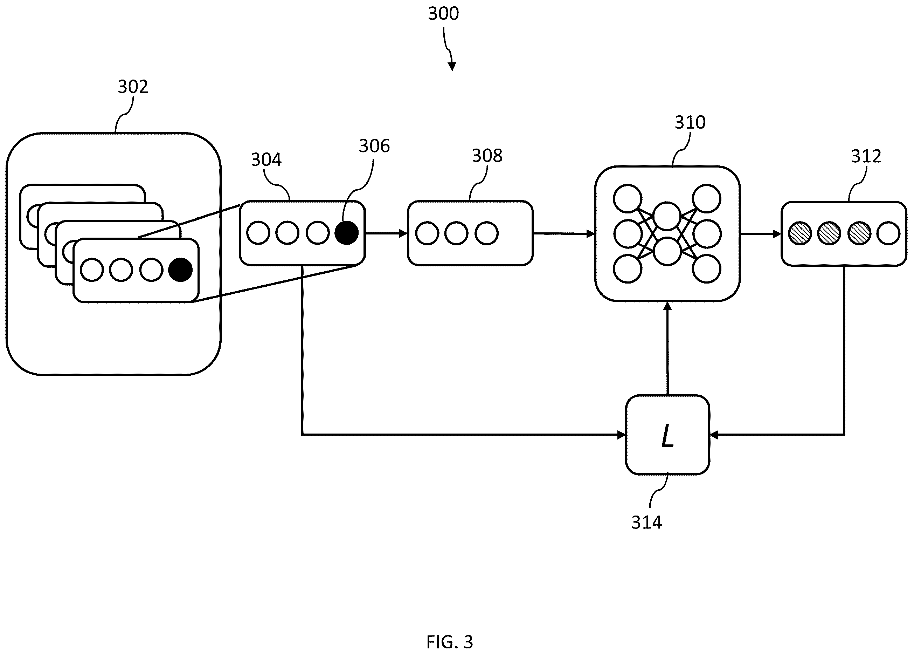

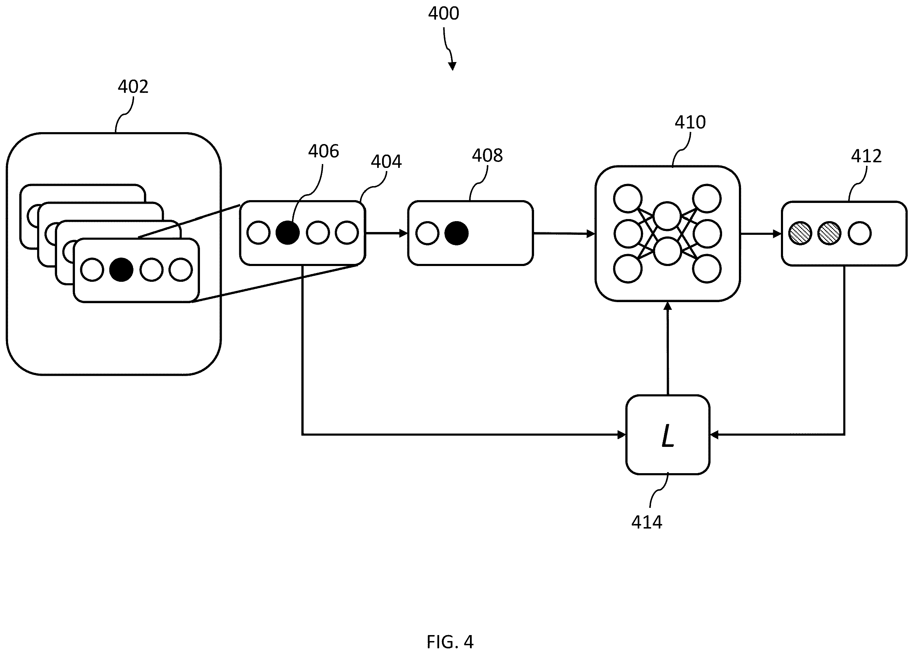

The machine-learning generative model 104 is a machine-learning model that has been trained to iteratively generate output data conditioned on previously generated data and selected interrupt options, for example as described in relation to Figs 3 and 4. For example, the machine-learning generative model 104 can, at each of a plurality of iterations, generate an element of an output sequence based on a set of input data that comprises a previously generated sequence of data. As an example, the machine-learning generative model 104 can generate a "next token" in a sequence of tokens conditioned on previously generated tokens and/or a sequence of tokens representing an input query 102. The machine-learning generative model 104 is, in some examples, an autoregressive model. Alternatively, the machine-learning generative model 104 is, in some examples, a diffusion model. The machine-learning generative model 104 is, in some examples, a neural network model, e.g., a transformer-based neural network model, a recurrent neural network mode, a convolutional neural network model, or the like. In some examples, the machine-learning generative model 104 is a large language model (LLM) and/or a vision and language model (VLM).

The input query 102 is, in some implementations, converted into a form/representation suitable for input into the generative model 104. For example, the input query 102 can be tokenized. Alternatively or additionally, the input query 102 can be used to populate a predefined prompt.

The input data 108 for the generative model 104 comprises a representation of the input query. For an iterative generative model 104, subsequent iterations of the generative process further comprise one or more previous outputs 106 of the generative model 104. For example, the generative model 104 takes as input 108 a sequence of data elements (e.g., tokens, frames of video data, etc.) and generates a next data element in the sequence as output data 106. In the example shown, the input data 106 comprises three data elements, and the generative model 104 processes the three data elements to generate output data 106 comprising the next token in the sequence (i.e., the unshaded token in the output sequence 106). The input data 106 for the next iteration of the generative process comprises at least a part (e.g., all) of the previous input sequence 108 and the newly generated data element.

When an interrupt option has been selected, a representation of the selected interrupt option is included in the input data 106 for a subsequent iteration, e.g., the iteration after the indication is received. For example, a token identifying the selected interrupt option may be added/appended to the sequence of input data 106.

The model output 106 for each iteration comprises one or more data elements generated by (i.e., decoded by) the generative model 104.

The data elements may comprise one or more generative data elements. Generative data elements represent parts of the generative output generated in response to the input query 102. For example, the generative data elements may represent parts of natural language output responsive to the input query 102. Alternatively, or additionally, the generative data elements may represent frames of video data generated based on target properties derived from the input query 102. One or more of the generative data elements may represent structural information about the generative output, e.g., formatting of the generative output, sections and/or subsections of the generative output, etc.

The data elements may further comprise, for some iterations, one or more interrupt data elements, i.e., tokens that represent one or more interrupt options to be exposed to a user. For example, the generative model 104 may decode a token indicating that an interrupt option should be output, e.g., ADD_INTERRUPT_OPTION_START, followed by one or more tokens identifying the interrupt token, e.g., a short description of the interrupt name, such as "Fast Forward" or "I already own this book", followed by a token indicating that the interrupt option has finished decoding, e.g., ADD_INTERRUPT_OPTION_END. Alternatively, in some examples, a single token identifying an interrupt option can be decoded by the generative model 104, e.g., ADD_INTERRUPT_OPTION_FAST_FORWARD, INTERRUPT_OPTION_FAST_FORWARD, INTERRPUT_FATS_FORWARD, etc. In some example, the interrupt data elements comprise one or more special characters and/or virtual tokens that identify the interrupt option. One or more interrupt options may be decoded in a row, e.g., the generative model 104 may decode a plurality of interrupt options consecutively.

In response to decoding an interrupt data element, the system causes the corresponding interrupt option to be exposed via an interface. The interface may, for example, be a user interface, such as a graphical user interface (GUI) of a user device. The interrupt option may be rendered via the GUI of a user device as a selectable GUI element, e.g., a button that a user can select with a click/touch. Alternatively or additionally, the interface may, for example, be an application programming interface (API). For example, the exposed interrupt options can be sent as an event to another program via the API. An external application (i.e., an application separate to the application running the generative model) can then select interrupt options via the API.

In some examples, the type of the output data element (e.g., whether the output is a generative data element or an interrupt data element) is determined at each iteration of the method, i.e., every time an output data element is generated, the type of the data element is determined and the corresponding action (e.g., output of the generative data element or an interrupt option) is performed. Alternatively, in some examples the types of the output data elements are determined after a plurality of iterations, e.g., a plurality of output data elements are generated, then their respective types checked and the corresponding actions (e.g., output of the generative data element or an interrupt option) taken. For example, the method may generate output data elements for N>1 iterations (e.g., N=4, 8 16, 32, etc.) before determining the types of output data elements and generating the respective outputs.

In some examples, the generative model 104 can decode an interrupt option termination data element. In response to decoding an interrupt option termination data element, the system can cause an exposed interrupt option to be removed from the interface. In some examples, decoding an interrupt option termination data element causes the corresponding interrupt option that is currently rendered via the GUI of a user device to be removed from the GUI. For example, the generative model 104 may decode a sequence of one or more tokens indicating that an interrupt removal operation should be initiated, e.g., a REMOVE_INTERRUPT_OPTION_START token, followed by one or more tokens identifying the interrupt token to be removed, e.g., "Fast Forward", followed by a token indicating that the interrupt option removal has finished decoding, e.g., REMOVE_INTERRUPT_OPTION_END. Alternatively, in some examples, a single token identifying an interrupt option can be decoded by the generative model 104, e.g., REMOVE_INTERRUPT_OPTION_FAST_FORWARD. Upon decoding such data elements, the corresponding interrupt option (e.g., the "Fast Forward" interrupt option in this example) is removed from the interface.

Interrupt options may be rendered via a display of a user device 108 as interactable elements that a user can interact with to select a rendered interrupt option. The interrupt options may be rendered as buttons containing text describing the interrupt option, e.g., "Skip" or "Fast forward". Alternatively or additionally, the interrupt options may be rendered as buttons containing symbolic representations of their action, e.g., a thumbs-up or thumbs-down icon.

In some examples, the generative model 104 is an LLM. The input query 102 is a natural language query. The generative model 104 generates generative output 106 representing natural language output (e.g., textual output and/or audio output) responsive to the input query 102. The natural language output may be structured, e.g., the generative model 104 may output markdown content that indicates structural properties of the natural language output, such as headings, section and subsections, bullet points, and/or the like. Such structure in the output format can correlate with certain interrupts being useful, and the LLM can generate interrupt options (e.g., "skip to the next section", etc.) based at least in part on this structural information. For example, if the natural language output includes headings (e.g., titles for sections of the output), the generative model 104 may output interrupt options that include a "skip to next heading" interrupt option. If the natural language output comprises structural information indicating that the output is divided into sections and/or subsections, the generative model 104 may output interrupt options that include a "skip to next section" and/or "skip to next subsection" interrupt options.

The generative model 104 may output interrupt options that allow a user to adapt the generated natural language response on-the-fly, e.g., by altering the tone and/or verbosity of the responses. For example, the generative model 104 may be outputting instructions for a user to perform a task in response to a query and, based on user responses or otherwise, output interrupt options that are operative to adjust the tone and/or verbosity of the natural language response, e.g., a "Shorten Response" interrupt option that is operative to cause the generative model 104 to output less verbose responses to input queries.

In some examples, the generative model 104 is an audio-based generative model in which the generative model interacts with a user at least in part by audio, e.g., to output audio data in response to an input audio or natural language query. The generative model may output interrupt options that allow a user to adapt the generated output audio without having to provide additional audio or natural language input. For example, when a user is using public transport, the user might listen in audio mode to the model output, but provide input via interrupt buttons to avoid needing to speak out loud to the model. As a further example, interrupt options for adding instruments and/or changing the style of music of generated music can be provided during music generation. As a further example, during live podcast generation, interrupt options relating to topic emphasis, conciseness, and/or style (e.g., "More scientific") can be provided.

In some examples, the generative model 104 is a video-based generative model in which the generative model 104 generates video data in response to an input query 102, e.g., a natural language query, an input video sample and/or an input image. The generative model may output interrupt options that allow a user to adapt the generated output video on-the-fly, e.g., by fast forwarding the generated video, skipping to a next scene in the video, adjusting lighting conditions in the generated video (e.g., "brighten" or "darken"), adapting content in the generated video (e.g., removing and/or adding objects/characters to the video). For example, during the generation of a video scene using a diffusion model, a "skip scene" interrupt option may be displayed to the user via the user interface. Selection of the "skip scene" interrupt option by the user causes the generation of the current scene to be skipped, and the diffusion model to start generating a subsequent scene of the video.

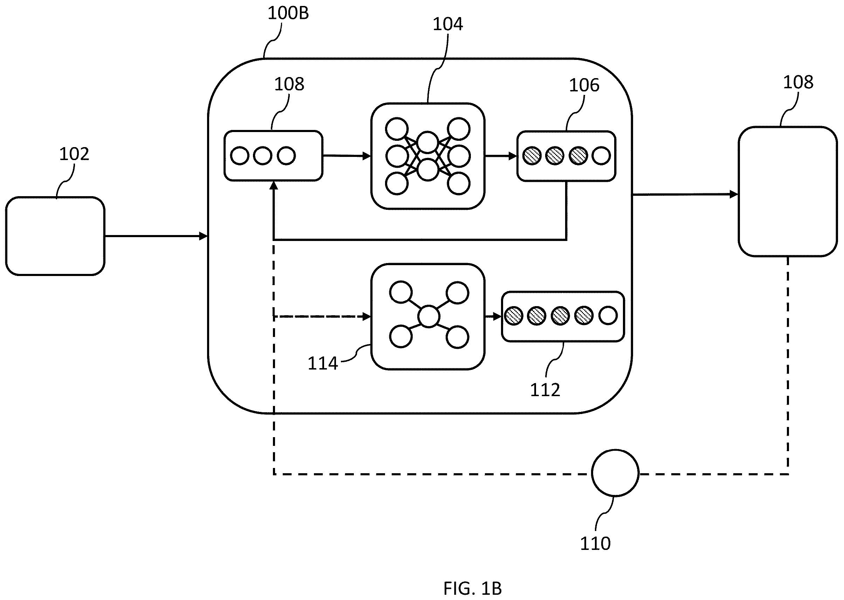

FIG. 1B shows an overview of a further example system 100B for generating generative output using a machine-learning model. The system operates in a similar manner to Fig. 1A, but instead of the selected interrupt option adapting the output of the machine-learning generative model 104, the selected interrupt option causes the system 100 to halt/pause/cease generating generative output 106 using the machine-learning generative model 104, and switch to generating generative output 112 using a further machine-learning generative model 110, e.g., a more lightweight model than the original generative model 104. In some examples, the system 100A of Fig. 1 and the system 100B of Fig. 1B can be combined, with a selected interrupt option causing the system to either adapt the output of the original machine-leaning generative model 104 or switch to using the further machine-learning generative model 114, depending on the type of interrupt option selected.

In further detail, a user input 102 is received by the system 100. The user input 102 is iteratively processed by a first generative ML model 104 to generate generative output 106. The generative output 106 for the iteration comprises an output data element indicative of a generative output of the machine-learning generative model, and/or an interrupt data element indicative of one or more interrupt options. If the generative output 106 comprises an output data element, the output data element can be output to a user, e.g., via a user device 108. If the generative output 106 comprises an interrupt data element, the corresponding one or more interrupts are exposed via an interface, e.g., output for display and interaction via the user device 108.

The user may interact with an exposed interrupt option during the generation of the generative output 106 to select that interrupt option. An indication of the selected interrupt option 110 is then fed into the system 100. The indication of the selected interrupt option 110 causes the system 100B to stop generating generative output 106 using the first machine-leaning generative model 104 and start generating generative output 112 using a further (i.e., second) machine-leaning generative model 114. For example, when the system 100B determines that the indication of the selected interrupt option 110 corresponds to one of a predefined set of interrupt options (e.g., a "fast forward" option), the system 100B pauses the generative model 104 and feeds at least a part of the generative output 106 of the model 104 into the further machine-leaning generative model 114, along with the user query 102 and, in some examples, the indication of the interrupt option 110. In some examples, the whole context is input into the further machine-leaning generative model 114. In some examples, a predefined window of previous context is input into the further machine-leaning generative model 114 This input is iteratively processed by the further generative ML model 114 to generate further generative output 112 in a similar manner to the first generative model 104.

The system 100B may continue to generate generative output using the further generative model 114 until a further interrupt option is selected (e.g., a "resume" or "play" option). The system 100B receives the further interrupt option, which causes the system 100B to stop generating generative output 112 using the further generative model 114, and to restart generating generative output 108 using the first generative model 104. For example, when a "resume" interrupt option is selected, input based on at least a part of the most recent further generative output 112 from the second generative model 114 can be used as input 106 to the first generative model 104, e.g., the most recent further generative output 112 and the user query 102 can be used as input 106 to the first generative model 108. In some examples, the full output of the further generative model 114 is used as part of the input to the first generative model 104, i.e., the whole context. N some examples, s predefined window of previous context is used as input to the first generative model 104, e.g., the output of the previous N>1 iterations of the further generative model 114. The first generative model 104 then proceeds to iteratively generate generative output 106.

The further generative model 114 is a machine-learning model that has been trained to iteratively generate output data conditioned on previously generated data and selected interrupt options, for example as described in relation to Figs 3 and 4. The further generative model 114 is, in some examples, a more lightweight model than the first machine-learning model 104. For example, the further generative model 114 can have fewer layers and/or parameters than the first generative model 104.

The further generative model 114 may generate output 112 at a lower resolution than the first generative model 104. For example, the further generative model 114 may generate output visual data (e.g., video) at a lower spatial resolution (i.e., pixel resolution) and/or temporal resolution (i.e., frames per second of video) than the first generative model 104.

For example, the first generative model 104 generates a sequence of video frames in response to an input query, e.g., a natural language description of a target video and/or an input image. During generation of the video, the first generative model 104 decodes an interrupt option that causes a "Fast-forward" interrupt option to be rendered on a display of a user device 108. When the user selects the "Fast-forward" interrupt option, decoding by the first generative model 104 is paused/halted, and decoding by a second generative model 114 is initiated using the current generative output 106 of the first generative model 104. The second generative model 114 generates video frames a lower spatial and temporal resolution than the first generative model 104. Typically, this model will decode output at a faster rate than the first generative model 104. This can allow the user to skip ahead quickly and efficiently in the generated video content without being limited to skipping to a specific point, e.g., to a scene change.

As a further example, the generative model 104 may be a diffusion model that generates sequences of output data, e.g., video, at successively higher qualities (e.g., lower noise levels) at each iteration based on an input query. During generation of the video, the first generative (diffusion) model 104 decodes an interrupt option that causes a "lower quality" interrupt option to be rendered on a display of a user device 108. When the user selects the "lower quality" interrupt option, decoding by the first generative model 104 is paused/halted, and decoding by a second generative (diffusion) model 114 is initiated using the current generative output 106 of the first generative model 104. The second generative model 114 may run fewer iterations to generate an output video than the first model 104, resulting in noisier/lower quality output data than the first model (but at the same spatial and temporal resolution).

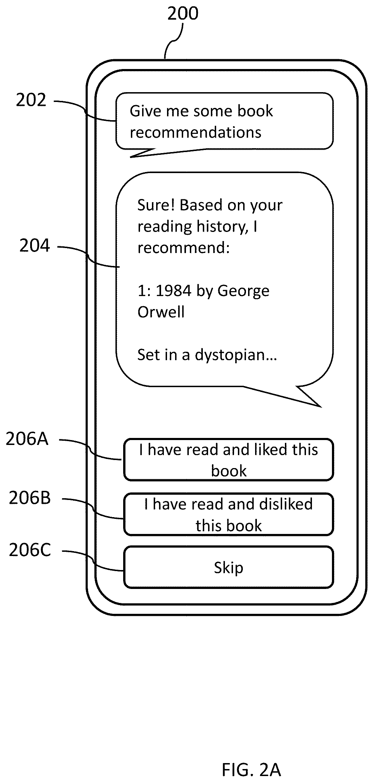

Fig. 2A shows an example of a user interface of a user device 200 displaying generative output alongside interrupt options. In the example shown, the user device 200 is a touch screen device, though it will be appreciated that other types of user device (e.g., a personal computer, a laptop computer, etc.) can alternatively be used.

In the example shown, the generative output is a natural language response 204 to the input natural language query 202 "Give me some book recommendations." The generative model decodes a natural language response 204, for example as described in relation to Figs. 1A and 1B, that starts providing a list of books that the user may be interested in, and a corresponding summary for each book. The natural language response 204 may be output in real-time, i.e., as each word is decoded it is output via the user interface of the user device 200.

During decoding of the natural language response 204, the generative model outputs data indicating that interrupt options 206A-C should be displayed via the user interface. In response to such data, the user device 200 renders the output interrupt options 206A-C as interactable elements of the user interface of the user device 200, e.g., a button or buttons that the user can interact with via touch and /or clicks. In the example shown, the user interface is displaying an "I have read and liked this book" interrupt option 206A, an "I have read and disliked this book" interrupt option 206B, and a "Skip" interrupt option 206C. One or more of the interrupt options 206A-C may be always displayed during decoding of the response 204, e.g., the "Skip" option can be permanently displayed during decoding rather than being displayed in response to decoding an interrupt data element.

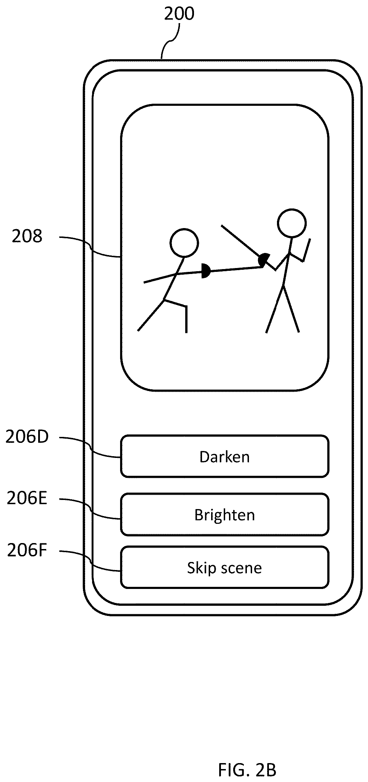

Fig. 2B shows a further example of a user interface of a user device 200 displaying generative output alongside interrupt options. In the example shown, the user device 200 is a touch screen device, though it will be appreciated that other types of user device (e.g., a personal computer, a laptop computer, etc.) can alternatively be used.

In the example shown, the generative output is a video 208 generated in response to a user input (not shown), e.g., a natural language prompt or other instructions for generating a video. The video 208 may be generated on a frame-by-frame basis, e.g., using an autoregressive model. Alternatively, the video 208 may be generated on a scene-by-scene basis or all at once, e.g., using a diffusion-based model.

During decoding of the natural language response 204, the generative model outputs data indicating that interrupt options 206D-F should be displayed via the user interface. In response to such data, the user device 200 renders the output interrupt options 206D-F as interactable elements of the user interface of the user device 200, e.g., a buttons that the user can interact with via touch and /or clicks. In the example shown, the user interface is displaying a "darken" interrupt option 206D operable to decrease the brightness of the generated video, a "lighten" interrupt option 206E operable to increase the brightness of the generated video, and a "Skip scene" interrupt option 206F operable to skip to the next generated scene of the video. One or more of the interrupt options 206D-F may be always displayed during decoding of the video 204, e.g., the "Skip scene" option can be permanently displayed during decoding rather than being displayed in response to decoding an interrupt data element.

FIG. 3 shows an overview of an example method 300 for training/fine-tuning a generative model to generate interrupt options during generation of generative output. The method 300 may be performed by one or more computers operating in one or more locations.

The method 300 utilizes a training dataset 302 comprising a plurality of training examples 304. Each training example comprises a sequence of ground truth training data elements. At least some of the training examples comprise a sequence of ground truth training data elements that includes an interrupt option data element 306. For a plurality of iterations, the method 300 comprises obtaining a training example 304 from the training dataset 302. A subsequence of data elements 308 of the training example is generated from the training example 304. The subsequence 308 is processed by the machine-learning generative model 310 to predict one or more next data elements 312 in the sequence. The generated one or more next data elements 312 in the sequence are compared to respective ground truth data elements in the training example 304 using a loss/objective function 314. The comparison is used to determine updates to parameters of the machine-learning generative model 310.

The training dataset 302 is, in some examples, an augmented training dataset derived from a training dataset that would be used to train the generative model 310 for the generative task. The training dataset 302 can, for example, be generated by analyzing the training dataset for structural data (or other signals) that may be associated with potential interrupt options, e.g., indicative of potential start and/or end points of interrupt options., For example, such structural data/signals may comprise one or more of: breaks/sections/bullet points in a document; new scenes in a video and/or audio, etc. Interrupt data elements are then inserted into the original training dataset at these points to generate the training dataset 302, e.g., interrupt option start and interrupt option end data elements.

As an example, the augmentation can add a fast-forward interrupt option data element whenever a list and/or heading structure in a natural language output, and/or a scene change in a video and/or audio output is detected. Alternatively or additionally, the augmentation can add an elaborate interrupt option data element whenever the training example 304 includes a short piece of text and/or audio. Alternatively or additionally, the augmentation can add a model steering interrupt option data element based on a concept/content that is included in the training example 304, e.g., concepts that are activated/not activated by the input query for the training example.

In some examples, human rates may be used to insert interrupt options into the original dataset. Alternatively or additionally, a sequence-to-sequence model, such as an LLM, may be prompted to propose interrupt options given a training example, which can optionally be scored by human raters, and added to the training dataset 302 if the human rating is above a threshold value.

In some examples, to avoid the model too often switching between different interrupt options, the training examples can be processed to ensure that each interrupt option in the example is shown for at least a threshold amount of time and/or a threshold number of decoding steps.

The training examples 304 includes, in some examples, a representation of a corresponding input query to which the training example 304 is responsive to.

The loss/objective function 314 can be any relevant generative loss function used in the art for the generative task. For example, the objective function can be a cross-entropy loss between the generated/predicted data elements and the corresponding ground truth data elements in the training example 304. Alternatively or additionally, a contrastive loss can be used as the objective function 314. The parameter updates for the generative model 310 are generated from the values of the loss/objective function using an optimization routine, such as stochastic gradient descent.

In some examples, the method 300 starts from a pre-trained generative model 310 that has been pre-trained on a generative task. The generative model 310 is then fine-tuned on the interrupt option-augmented training dataset to output interrupt data elements in addition to the generative output. Any fine-tuning method known in the art may be used to fine tune the generative model 310.

Alternatively, the generative model can be pre-trained using the augmented dataset.

Fig. 4 shows an overview of an example method for training a generative model to respond to selected interrupt options during generation of generative output. The method of Fig. 4 may be used in combination with the method of Fig. 3 to fine-tune/train a generative model to both predict when to output interrupt options and how to respond to input interrupt options.

As described in relation to Fig. 3, the method 400 utilizes a training dataset 402 comprising a plurality of training examples 404. Each training example comprises a sequence of ground truth training data elements. At least some of the training examples comprise a sequence of ground truth training data elements that includes an indication of a selected interrupt option 406. For a plurality of iterations, the method 400 comprises obtaining a training example 404 from the training dataset 402. A subsequence of data elements 408 of the training example is generated from the training example 404. The subsequence 408 is processed by the machine-learning generative model 410 to predict one or more next data elements 412 in the sequence. The generated one or more next data elements 412 in the sequence are compared to respective ground truth data elements in the training example 404 using a loss/objective function 414. The comparison is used to determine updates to parameters of the machine-learning generative model 410.

The training dataset 402 is, in some examples, an augmented training dataset derived from a training dataset that would be used to train the generative model 410 for the generative task. The training dataset 402 can, for example, be generated by inserting interrupt tokens into training examples and, for some examples, altering the subsequent output of the training example to conform to the inserted interrupt option. In some examples, a generative model, such as an LLM can propose how to deal with the interrupt options, and a human rater can rate the results, with options scoring above a threshold value being incorporated into the training dataset 402.

For example, for a "fast-forward" or "skip" interrupt option, the interrupt option is inserted into the training example, and the subsequent data elements of the training example adapted to be data elements that skip whatever output was previously being decoded at that point, e.g., jumping to the next section/bullet point/scene in the generative output.

For some types of interrupt option, the reward model (e.g., objective function) can be adapted to reward/penalize properties of the generative output in dependence on the interrupt option in the training example. The form of the objective function used for a training example may have a dependence on the type of interrupt option used in said training example. For example, the objective function may comprise a plurality of terms, a subset of which are used for each respective type of interrupt option, i.e. other terms in the objective function are zeroed. For example, for an "elaborate" interrupt option, the generative model can be scored on a different reward model (e.g., an objective function with different terms) that rewards a more detailed output. For interrupt options related to model steering (e.g., "like" or "dislike" related options, or options relating to concepts that are activated / not activated by current queries), the reward can be adapted to (e.g., include terms that) reward the activation of new concepts in the output. For example, steering concept activation (e.g., as described in "Steering Llama 2 via Contrastive Activation Addition", N. Rimsky *et al.,* arXiv:2312.06681, the contents of which are incorporated herein by reference) can be used to adapt the loss function. Alternatively, separate reward models for each of a plurality of concepts/interrupt options may be used, i.e., a different loss/objective function can be used in dependence on the interrupt option.

The augmentation process may, in some examples, also include the augmentation described in relation to Fig. 3. For example, the training dataset may include training examples 404 that include interrupt option data elements, training examples 404 that include selected interrupt option data elements, and training examples 404 that include both interrupt option data elements and selected interrupt option data elements. In some examples, a subset of the training examples may include no interrupt option data elements or selected interrupt option data elements. The ratio of different types of examples can be controlled to make the model robust to both interrupted and uninterrupted inference.

In other respects, the method 400 is the same as the method 300 described in relation to Fig. 3.

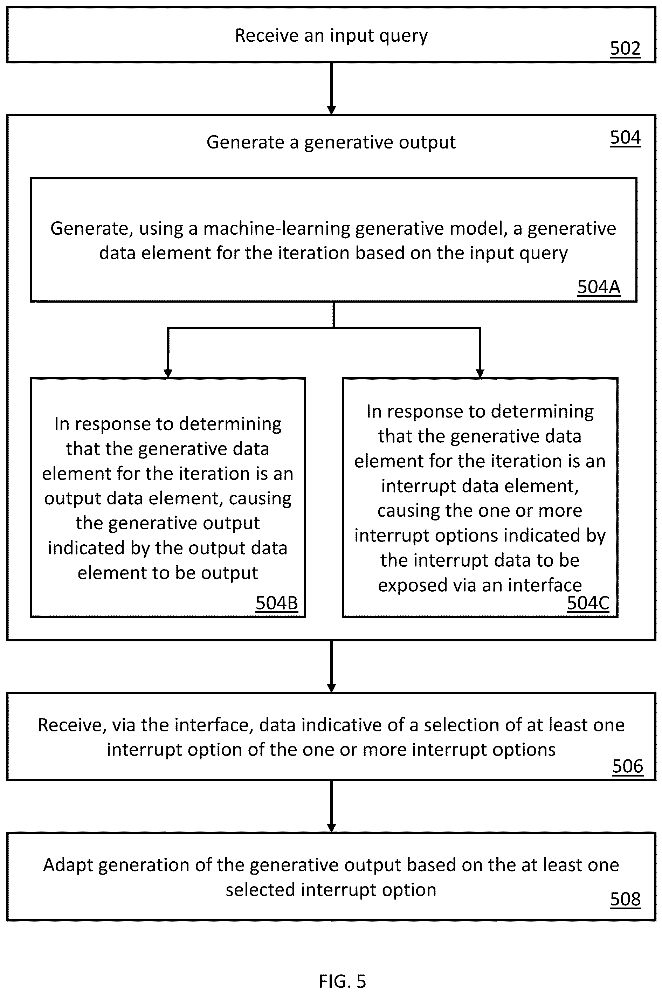

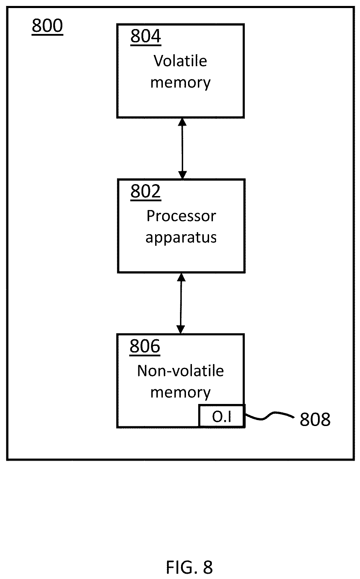

Fig. 5 shows a flow diagram of an example method 500 for generating generative output that includes interrupt options using a machine-learning model. The method 500 may be performed by one or more computing systems/apparatus operating in one or more locations, such as the computing systems/apparatus described in relation to Fig. 8. For convenience, the method 500 is described as being performed by a system.

At operation 502, the system receives an input query. The input query may be received via a user device, e.g., via a user interface of the user device, such as GUI. The input query comprises, in some examples, a natural language query. The natural language query may comprise a description of one or more target properties for a set of generative output. Alternatively or additionally, the input query comprises an image. Alternatively or additionally, the input query comprises a video sample. Alternatively or additionally, the input query comprises an audio sample, e.g., a voice sample.

At operation 504, the system generates generative output using a machine-learning generative model. Generating generative output comprises iteratively performing operations 504A-504C for one or more (e.g., a plurality) of iterations. The generative model is, in some examples, an autoregressive generative model configured to generate a sequence of output data iteratively conditioned on previous elements of the sequence output by the model. The generative model may be a neural network model. In some examples, the generative model is a transformer-based model, i.e., comprises one or more transformer layers. The generative model may be a large language model (LLM) or a visional and language model (VLM). In some examples, the generative model has been trained using the method described in relation to Figs. 3-4 and/or 7.

At operation 504A, the system generates, using the machine-learning generative model, a generative data element for the iteration based on the input query. In some examples, over the iterations the generative model generates a sequence of generative data elements. The generative data element comprises: (i) an output data element indicative of a generative output of the machine-learning generative model; and/or (ii) an interrupt data element indicative of one or more interrupt options. In some examples, the generative data element alternatively or additionally comprises an interrupt termination data element indicating one or more interrupt options for removal from the user interface.

An output data element is, in some examples, a token representing a generative output element, e.g., a natural language token representing at least a part of a word. The natural language token can be used to generate textual output for output to a user via a GUI and/or audio output (e.g., using a text-to-speech engine) for output to a user via a speaker of a user device. In some examples, an output data element is a frame of video data or a section of a frame of video data. In some examples, an output data element is a sample of audio data, e.g., a sample of spoken word and/or music.

The generating of the generative output is, in some examples, further based on generative outputs from a previous iteration.

The generating of the generative output is, in some examples, further based on an interrupt initiation input to the machine-learning generative model, for example, as described in relation to operations 506 and 508. The interrupt initiation input may, or example, be a token indicating an interrupt option that has been selected, either by the user or automatically by the system in response to a hardware event. In some examples, the interrupt initiation input is input to the machine-learning generative model in response to one or more processor interrupt signals. The one or more processor interrupts signals are, in some examples, issued in response to a hardware event detected by a hardware interface. For example, the hardware event may be a user interaction with a hardware interface configured to trigger interrupt signals in response to user inputs, e.g., a touchscreen device. Alternatively or additionally, the hardware event may be the automatic detection of a hardware event by the system, e.g., via an automated interface configured to issue interrupt signals in response to detecting a hardware event, such as a processor and/or memory load above a respective threshold value, a system/subsystem temperature above a threshold value, a power consumption above a threshold value, a battery level falling below a threshold value, and/or the like.

The system determines whether the generative data element comprises an output data element and/or an interrupt data element.

In response to determining that the generative data element comprises an output data element, at operation 504B the system causes the generative output indicated by the output data element to be output, e.g., via a user interface of a user device.

In response to determining that the generative data element comprises an interrupt data element, at operation 504C the system the one or more interrupt options indicated by the interrupt data to be exposed via an interface, e.g., displayed via a graphical user interface of a user device.

The system may iterate operations 504A to 504C until a termination condition is satisfied. The iterations of these operations may be referred to as "decoding" by the generative model.

At operation 506, the system receives, via the interface and during the decoding process, data indicative of a selection of at least one interrupt option of the one or more interrupt options.

At operation 508, the system adapts generation of the generative output based on the at least one selected interrupt option, i.e., adapts the decoding process based on the selected interrupt option. The system may then proceed with the decoding of the generative output, e.g., continue performing operations 504A-504C with the adapted input data.

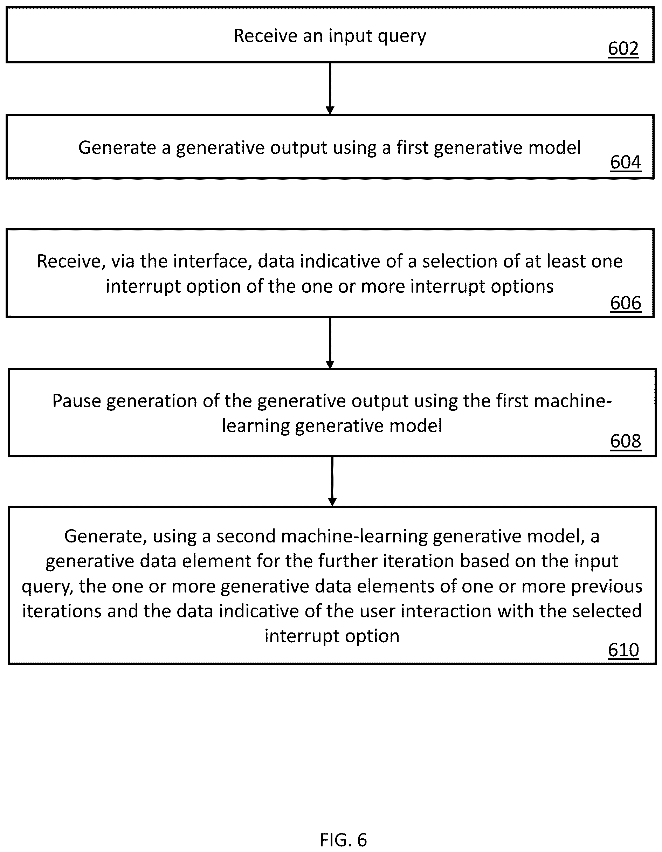

Fig. 6 shows a flow diagram of an example method 600 for generating generative output that includes interrupt options using a machine-learning model. The method 600 may be performed by one or more computing systems/apparatus operating in one or more locations, such as the computing systems/apparatus described in relation to Fig. 8. For convenience, the method 600 is described as being performed by a system. The method 600 of Fig. 6 is, in some examples, performed in addition to the method 500 of Fig. 5, e.g., the system can perform the method of Fig. 5 or Fig. 6 in dependence on a type of the selected interrupt option.

Operations 602 to 606 of the method 600 correspond to operations 502 to 506 of Fig. 5. At operation 602, the system receives an input query. At operation 604, the system generates generative output using a first machine-learning generative model. At operation 606, the system receives, via the interface and during the decoding process, data indicative of a selection of at least one interrupt option of the one or more interrupt options.

At operation 608, the system pauses generation of the generative output using the first machine-learning generative model.

At operation 610, the system generates, using a second machine-learning generative model, a generative data element for one or more further iterations based on the input query, the one or more generative data elements of one or more previous iterations and, in some examples, the data indicative of the user interaction with the selected interrupt option. The current output (i.e., most recent output) of the first generative model may be used as the initial input to the second machine-learning generative model. Such output may be formatted prior to input to the second generative model to match the input space of the second generative model. For subsequent iterations, the output of the second generative model for an iteration is used as input for the next iteration.

The second machine-learning generative model generates generative output until an end of string data element is decoded, or until a further interrupt option is selected that causes the decoding to switch back to the first generative model. For example, during the one or more further iterations, the system can receive, via the interface, input indicative of an intent to end the interrupt option. In response to receiving the input indicative of an intent to end the interrupt option, for one or more subsequent iterations, the system generates, using the first machine-learning generative model, a generative data element for the subsequent iteration based on the input query and one or more generative data elements of the one or more previous iterations and/or the data elements of the one or more further iterations.

The second machine-learning generative model is, in some examples, a model with a simpler structure than the first generative model, e.g., has fewer parameters and/or fewer layers than the first machine-learning generative model.

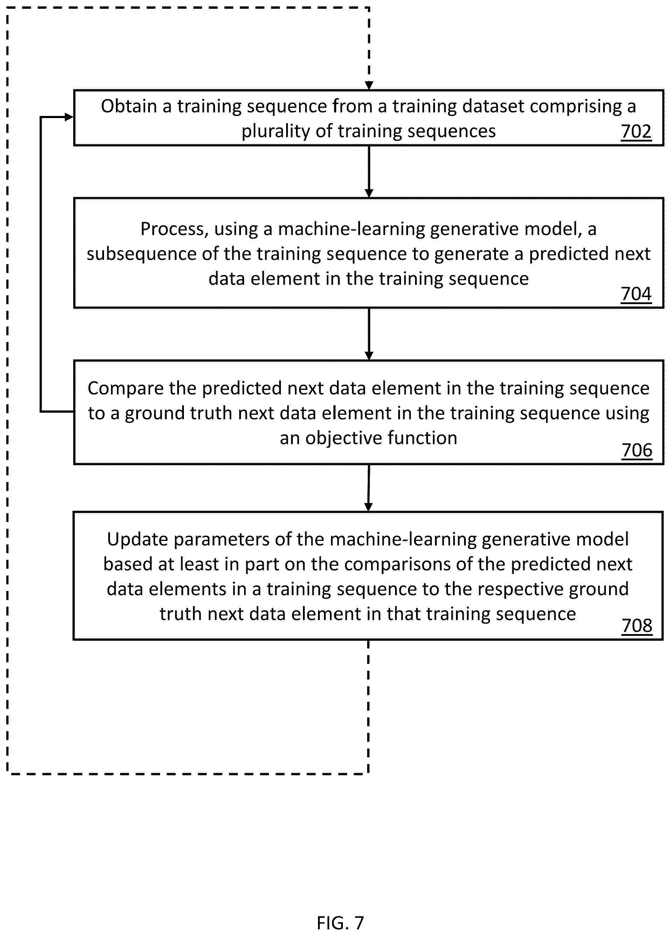

Fig. 7 shows a flow diagram of an example method 700 for training/fine-tuning a generative model to generate and/or respond to interrupt options. The method 600 may be performed by one or more computing systems/apparatus operating in one or more locations, such as the computing systems/apparatus described in relation to Fig. 8. For convenience, the method 700 is described as being performed by a system.

At operation 702, the system obtains a training example from a training dataset. The training dataset comprises a plurality of training examples, e.g., a plurality of training sequences. A training sequence comprises a sequence of data elements comprising a plurality of output data elements indicative of a target generative output of the machine-learning generative model. At least a subset of the training sequences comprises one or more interrupt data elements indicative of one or more interrupt options. The one or more interrupt options may comprise data indicating an identity of an interrupt option for exposure via an interface. Alternatively or additionally, the one or more interrupt data elements indicative of one or more interrupt options comprises data indicating an identity of a selected interrupt option.

At operation 704, the system processes, using a machine-learning generative model, a subsequence of the training example to generate a predicted next data element in the sequence.

At operation 706, the system compares the predicted next data element in the training sequence to a ground truth next data element in the training sequence using an objective function. The objective function can be any relevant objective function known in the art, e.g., a cross-entropy loss. In some examples, the system adapts the objective function based at least in part on an interrupt data element included in the subsequence of the training sequence.

The system may repeat operations 702 to 706 for a plurality of iterations, using a different training subsequence and/or training example for each iteration. For example, operations 702 to 706 may be iterated over a batch or mini-batch of training examples.

At operation 708, the system updates parameters of the machine-learning generative model based at least in part on the comparisons of the predicted next data elements in a training sequence to the respective ground truth next data element in that training sequence. An optimization routine, such as stochastic gradient descent, may be applied to the objective function to determine the parameter updates. In some examples, the system updates a first subset of parameters of the machine-learning generative model while keeping a second subset of parameters of the machine-learning generative model fixed, i.e., fine-tunes a subset of parameters of the machine-learning model.

Operations 702 to 708 may be iterated until one or more threshold conditions are satisfied, e.g., a threshold performance on a test dataset and/or a threshold number of iterations.

Fig. 8 shows a schematic example of a system/apparatus 800 for performing any of the methods described herein. The system/apparatus shown is an example of a computing device. It will be appreciated by the skilled person that other types of computing devices/systems may alternatively be used to implement the methods described herein, such as a distributed computing system.

The apparatus (or system) 800 comprises one or more processors 802. The one or more processors control operation of other components of the system/apparatus 800. The one or more processors 802 may, for example, comprise a general-purpose processor. The one or more processors 802 may be a single core device or a multiple core device. The one or more processors 802 may comprise a Central Processing Unit (CPU) or a graphical processing unit (GPU). Alternatively, the one or more processors 802 may comprise specialized processing hardware, for instance a RISC processor or programmable hardware with embedded firmware. Multiple processors may be included.

The system/apparatus comprises a working or volatile memory 804. The one or more processors may access the volatile memory 804 in order to process data and may control the storage of data in memory. The volatile memory 804 may comprise RAM of any type, for example, Static RAM (SRAM), Dynamic RAM (DRAM), or it may comprise Flash memory, such as an SD-Card.

The system/apparatus comprises a non-volatile memory 806. The non-volatile memory 806 stores a set of operation instructions 808 for controlling the operation of the processors 802 in the form of computer readable instructions. The non-volatile memory 806 may be a memory of any kind such as a Read Only Memory (ROM), a Flash memory or a magnetic drive memory.

The one or more processors 802 are configured to execute operating instructions 808 to cause the system/apparatus to perform any of the methods described herein. The operating instructions 808 may comprise code (i.e. drivers) relating to the hardware components of the system/apparatus 800, as well as code relating to the basic operation of the system/apparatus 800. Generally speaking, the one or more processors 802 execute one or more instructions of the operating instructions 808, which are stored permanently or semi-permanently in the non-volatile memory 806, using the volatile memory 804 to store temporarily data generated during execution of said operating instructions 808.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors, or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The essential elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small, embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

This specification also includes the following clauses:
Clause 1. A computer implemented method comprising: receiving an input query; generating an output, the generating comprising, for a plurality of iterations: generating, using a machine-learning model, a data element for the iteration based on the input query, wherein the data element comprises: (i) an output data element indicative of an output of the machine-learning model; and/or (ii) an interrupt data element indicative of one or more interrupt options; for one or more of the plurality of iterations: in response to determining that the data element for the iteration and/or a previous iteration is an output data element, causing the output indicated by the output data element to be output; and in response to determining that the generative data element for the iteration and/or a previous iteration is an interrupt data element, causing the one or more interrupt options indicated by the interrupt data to be exposed via an interface; during generation of the output: receiving, via the interface, data indicative of a selection of at least one interrupt option of the one or more interrupt options; and adapting the generation of the output based on the at least one selected interrupt option.
Clause 2. The computer-implemented method of clause 1, wherein the data element for at least one iteration is further based on one or more data elements of a previous one or more iterations.
Clause 3. The computer-implemented method of any of clauses 1 or 2, wherein the data element for the iteration is further based on an interrupt initiation input to the machine-learning generative model.
Clause 4. The computer-implemented method of clause 3, wherein the interrupt initiation input is input to the machine-learning generative model in response to one or more processor interrupt signals.
Clause 5. The computer-implemented method of clause 4, wherein the one or more processor interrupts signals are issued in response to a hardware event detected by a hardware interface.
Clause 6. The computer implemented method of any of clauses 1 to 5, wherein: the data element for an iteration alternatively or additionally comprises an interrupt termination data element indicating one or more interrupt options for removal from the interface; and wherein the method further comprises, for one or more of the iterations: in response to determining that the data element for the iteration and/or a previous iteration is an interrupt termination data element, causing one or more exposed interrupt options corresponding to the one or more interrupt options for removal from the interface to be removed from the interface.
Clause 7. The computer implemented method of any of clauses 1 to 6, wherein: the output data elements indicative of an output of the machine-learning model comprises one or more tokens; the interrupt data element indicative of one or more interrupt options comprises a plurality of interrupt tokens, the plurality of interrupt tokens comprising one or more interrupt initiation tokens and a respective one or more interrupt identity tokens.
Clause 8. The computer implemented method of any of clauses 1 to 7, wherein an output data element indicative of a generative output of the machine-learning generative model comprises audio data.
Clause 9. The computer implemented method of any of clauses 1 to 7, wherein an output data element indicative of an output of the machine-learning generative model comprises a token indicative of a natural language output.
Clause 10. The computer implemented method of any of clauses 1 to 7, wherein an output data element indicative of an output of the machine-learning generative model comprises pixel data representing at least a part of a frame of video data.
Clause 11. The computer implemented method of any of clauses 1 to 10, wherein the interrupt option comprises one or more of: a pause command; a fast forward command; a skip command; an elaboration command; an expand command; a mute command; and/or a summarize command.
Clause 12. A system comprising one or more processors and a memory, the memory storing computer readable instructions that, when executed by the one or more processors, cause the system to perform a method comprising: receiving an input query; generating an output, the generating comprising, for a plurality of iterations: generating, using a first machine-learning model, a data element for the iteration based on the input query, wherein the data element comprises: (i) an output data element indicative of an output of the machine-learning generative model; and/or (ii) an interrupt data element indicative of one or more interrupt options; for one or more of the plurality of iterations: in response to determining that the data element for the iteration and/or a previous iteration is an output data element, causing the output indicated by the output data element to be output; and in response to determining that the data element for the iteration and/or a previous iteration is an interrupt data element, causing the one or more interrupt options indicated by the interrupt data to be exposed via an interface; during generation of the output: receiving, via the interface, data indicative of a selection of at least one interrupt option of the one or more interrupt options; pausing generation of the output using the first machine-learning model; for one or more further iterations: generating, using a second machine-learning model, a data element for the further iteration based on the input query and the one or more data elements of one or more previous iterations.
Clause 13. The system of clause 12, wherein the second machine-learning model has fewer parameters than the first machine-learning model.
Clause 14. The system of any of any of clauses 12 or 13, wherein the method further comprises: during the one or more further iterations, receiving, via the interface, input indicative of an intent to end the interrupt option; in response to receiving the input indicative of an intent to end the interrupt option, for one or more subsequent iterations: generating, using the first machine-learning model, a data element for the subsequent iteration based on the input query and one or more data elements of the one or more previous iterations and/or the data elements of the one or more further iterations.
Clause 15. The system of any of any of clauses 12 to 14, wherein: an output data element indicative of an output of the first machine-learning model comprises pixel data representing at least a part of a frame of video data at first pixel and/or temporal resolution; and an output data element indicative of an output of the second machine-learning model comprises pixel data representing at least a part of a frame of video data at second pixel and/or temporal resolution, wherein the first pixel and/or temporal resolution is higher than the second pixel and/or temporal resolution.
Clause 16. A computer implemented method for training a machine-learning generative model, the method comprising: for each of one or more iterations: obtaining a training sequence from a training dataset comprising a plurality of training sequences, the training sequence comprising a sequence of data elements comprising: a plurality of output data elements indicative of a target output of the machine-learning model; and one or more interrupt data elements indicative of one or more interrupt options; processing, using the machine-learning model, a subsequence of the training sequence to generate a predicted next data element in the training sequence; and comparing the predicted next data element in the training sequence to a ground truth next data element in the training sequence using an objective function; and updating parameters of the machine-learning model based at least in part on the comparisons of the predicted next data elements in a training sequence to the respective ground truth next data element in that training sequence.
Clause 17. The method of clause 16, wherein the one or more interrupt data elements indicative of one or more interrupt options comprises: data indicating an identity of an interrupt option for exposure via an interface.
Clause 18. The method of any of clauses 16 or 17, wherein the one or more interrupt data elements comprises: data indicating an identity of a selected interrupt option.
Clause 19. The method of any of clauses 16 to 18, wherein updating parameters of the machine-learning generative model based at least in part on the comparisons of the predicted next data elements in a training sequence to the respective ground truth next data element in that training sequence comprises: updating a first subset of parameters of the machine-learning generative model while keeping a second subset of parameters of the machine-learning generative model fixed.
Clause 20. The method of any of clauses 16 to 18, wherein updating parameters of the machine-learning generative model based at least in part on the comparisons of the predicted next data elements in a training sequence to the respective ground truth next data element in that training sequence comprises: adapting the objective function based at least in part on an interrupt data element included in the subsequence of the training sequence.

## Claims

1. A computer implemented method comprising:
receiving an input query;
generating an output, the generating comprising, for a plurality of iterations:
generating, using a machine-learning model, a data element for the iteration based on the input query, wherein the data element comprises: (i) an output data element indicative of an output of the machine-learning model; and/or (ii) an interrupt data element indicative of one or more interrupt options;
for one or more of the plurality of iterations:
in response to determining that the data element for the iteration and/or a previous iteration is an output data element, causing the output indicated by the output data element to be output; and
in response to determining that the generative data element for the iteration and/or a previous iteration is an interrupt data element, causing the one or more interrupt options indicated by the interrupt data to be exposed via an interface;
during generation of the output:
receiving, via the interface, data indicative of a selection of at least one interrupt option of the one or more interrupt options; and
adapting the generation of the output based on the at least one selected interrupt option.

2. The computer-implemented method of claim 1, wherein the data element for at least one iteration is further based on one or more data elements of a previous one or more iterations.

3. The computer-implemented method of any of claims 1 or 2, wherein the data element for the iteration is further based on an interrupt initiation input to the machine-learning generative model.

4. The computer-implemented method of claim 3, wherein the interrupt initiation input is input to the machine-learning generative model in response to one or more processor interrupt signals.

5. The computer-implemented method of claim 4, wherein the one or more processor interrupts signals are issued in response to a hardware event detected by a hardware interface.

6. The computer implemented method of any of claims 1 to 5, wherein:
the data element for an iteration alternatively or additionally comprises an interrupt termination data element indicating one or more interrupt options for removal from the interface; and
wherein the method further comprises, for one or more of the iterations:
in response to determining that the data element for the iteration and/or a previous iteration is an interrupt termination data element, causing one or more exposed interrupt options corresponding to the one or more interrupt options for removal from the interface to be removed from the interface.

7. The computer implemented method of any of claims 1 to 6, wherein:
the output data elements indicative of an output of the machine-learning model comprises one or more tokens;
the interrupt data element indicative of one or more interrupt options comprises a plurality of interrupt tokens, the plurality of interrupt tokens comprising one or more interrupt initiation tokens and a respective one or more interrupt identity tokens.

8. The computer implemented method of any of claims 1 to 7, wherein an output data element indicative of a generative output of the machine-learning generative model comprises audio data, or wherein an output data element indicative of an output of the machine-learning generative model comprises a token indicative of a natural language output.

9. The computer implemented method of any of claims 1 to 7, wherein an output data element indicative of an output of the machine-learning generative model comprises pixel data representing at least a part of a frame of video data.

10. The computer implemented method of any of claims 1 to 9, wherein the interrupt option comprises one or more of: a pause command; a fast forward command; a skip command; an elaboration command; an expand command; a mute command; and/or a summarize command.

11. A system comprising one or more processors and a memory, the memory storing computer readable instructions that, when executed by the one or more processors, cause the system to perform a method comprising the method of any preceding claim.

12. A computer implemented method for training a machine-learning generative model, the method comprising:
for each of one or more iterations:
obtaining a training sequence from a training dataset comprising a plurality of training sequences, the training sequence comprising a sequence of data elements comprising:
a plurality of output data elements indicative of a target output of the machine-learning model; and
one or more interrupt data elements indicative of one or more interrupt options;
processing, using the machine-learning model, a subsequence of the training sequence to generate a predicted next data element in the training sequence; and
comparing the predicted next data element in the training sequence to a ground truth next data element in the training sequence using an objective function; and
updating parameters of the machine-learning model based at least in part on the comparisons of the predicted next data elements in a training sequence to the respective ground truth next data element in that training sequence.

13. The method of claim 12, wherein the one or more interrupt data elements indicative of one or more interrupt options comprises:
data indicating an identity of an interrupt option for exposure via an interface and/or data indicating an identity of a selected interrupt option.

14. The method of any of claims 12 to 13, wherein updating parameters of the machine-learning generative model based at least in part on the comparisons of the predicted next data elements in a training sequence to the respective ground truth next data element in that training sequence comprises:
updating a first subset of parameters of the machine-learning generative model while keeping a second subset of parameters of the machine-learning generative model fixed.

15. The method of any of claims 16 to 18, wherein updating parameters of the machine-learning generative model based at least in part on the comparisons of the predicted next data elements in a training sequence to the respective ground truth next data element in that training sequence comprises:
adapting the objective function based at least in part on an interrupt data element included in the subsequence of the training sequence.
